# EUROPEAN PATENT APPLICATION

(11) **EP 1 414 024 A1**
(43) Date of publication of application: **28.04.2004**
(21) Application number: 02360286.5
(22) Date of filing: 21.10.2002
(51) Int. Cl.: G10L 19/00, H04M 7/00, H04L 12/66

(54) **Realistic comfort noise for voice calls over packet networks**

(71) Applicant: ALCATEL, 75008 Paris (FR)
(72) Inventor: Baeder, Rainer, 70771 Leinfelden (DE)
(74) Representative: Menzietti, Domenico, Dipl.-Ing

(57) **Abstract**

It is an object of the invention to provide both data traffic reduction and a more representative background noise in a telecommunications system with voice activity detection. The invention provides a gateway being configured such as to detect background noise of a first party being connected to a second party via a VolP connection in at least two different frequency ranges, to encode the noise in each frequency range into a noise parameter and to send the encoded noise parameters to a second gateway via the VolP connection. The invention could also be applied to VoATM.

## Description

### Technical field:

The invention concerns a gateway for telecommunications systems.

### Background of the invention:

To reduce data traffic voice activity detection (VAD) shall be implemented in a gateway connected to the Internet and used for VolP connections; VolP = Voice over Internet Protocol. During those time slots in which no voice of a first party being connected to a second party via a VolP connection is detected white noise is generated and transmitted to the second party. The white noise is in most of the cases not representative for the real background noise at the first party, the first party being e.g. at an airport or in a car. The second party may have the impression that the connection is already disconnected.

### Summary of the invention:

It is an object of the invention to provide both data traffic reduction and a more representative background noise in a telecommunications system with voice activity detection.

The invention provides a gateway being configured such as to detect background noise of a first party being connected to a second party via a VolP connection in at least two different frequency ranges, to encode the noise in each frequency range into a noise parameter and to send the encoded noise parameters to a second gateway via the VolP connection.
The background noise at the first party is measured in at least two frequency ranges. During those time slots in which no voice of the first party being connected to a second party via a VolP connection is detected background noise parameters for each frequency range are generated in the gateway and transmitted to a second gateway being connected to the second party. In the second gateway a conversion of the received parameters into corresponding noise is performed. The generated corresponding noise is transmitted to the second party.

A gateway with an improved functionality is provided. The gateway and the inventive elements could be implemented in software only, hardware only, or a mixture of hardware and software.
The second party has a realistic impression of the background noise of the first party.
The invention could also be applied to VoATM; VoATM = Voice over Asynchronous Transfer Mode.
The invention is independent of the used terminal, e.g. ISDN terminal, analog phone, mobile phone, PC plus headset; ISDN = Integrated Services Digital Network, PC = Personal Computer.

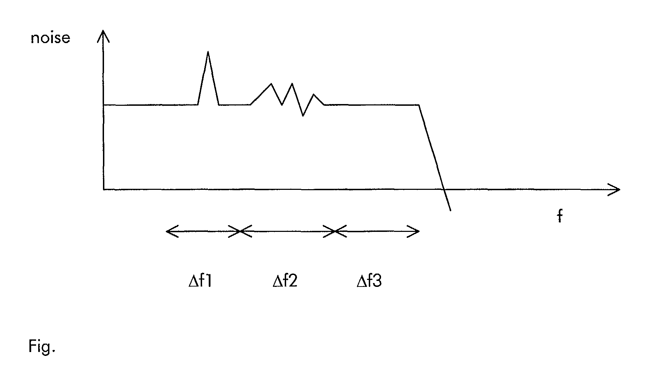

### Brief description of the drawing:

The single figure shows a simplified diagram of a background noise spectrum at a first party.

### Best mode for carrying out the invention:

A gateway being connected to a first party and the Internet measures the voice activity of the first party. If the first party does not speak the background noise at the first party is measured. The measurement includes noise determination (e.g. spectral density) in at least two different, nonoverlapping frequency ranges. The noise in each frequency range is encoded into a noise parameter, e.g. using a table including a first frequency range Δf1, corresponding encoded noise amplitude 1 (e.g. two bytes), Δf2, corresponding encoded noise amplitude 2, Δf3, corresponding encoded noise amplitude 3. The content of the table is transmitted in the payload of an IP packet to a second gateway being connected to the Internet and the second party. Alternatively only the encoded noise parameters are transmitted in the payload of an IP packet. Alternatively only those encoded noise parameters (and the corresponding frequency ranges) are transmitted in the payload of an IP packet which are different from white noise. The measured background noise may be compared with stored characteristic noises, e.g. airport or car, or previously measured noises of the first party. The encoding process makes e.g. use of the already stored knowledge at the second gateway and provides only abbreviations which correspond to respective noises. Thus, the amount of data to be transmitted could be minimized. The second gateway receives the noise parameters, generates corresponding noise and transmits the noise to the second party.

The parameters are transmitted in data packets. Each data packet has a header and a payload. The header includes e.g. ATM and/or IP information fields. The parameters are transmitted in the payload.

A telecommunications system includes e.g. a first gateway being connected to a second gateway via Internet. The first gateway is further connected to a plurality of terminals via one or more exchanges. The second gateway is further connected to a plurality of terminals via one or more exchanges. Each terminal is part of a customer premises equipment of a subscriber. A subscriber is also called a party. The terminals could be wireline or wireless terminals.

The first gateway includes a processor, e.g. a digital signal processor, and storage means to store a specific computer program. The computer program has computer program codes, e.g. programmed using a programming language like C++, to detect background noise of a first party being connected to a second party via a VolP or VoATM connection in at least two different frequency ranges, to encode the noise in each frequency range into a noise parameter and to send the encoded noise parameters to the second gateway via the VolP or VoATM connection, respectively.

The second gateway includes a processor, e.g. a digital signal processor, and storage means to store a specific computer program. The computer program has computer program codes, e.g. programmed using a programming language like C++, to detect background noise of a first party being connected to a second party via a VolP or VoATM connection in at least two different frequency ranges, to encode the noise in each frequency range into a noise parameter and to send the encoded noise parameters to the first gateway via the VolP or VoATM connection, respectively.

The first gateway further includes specific computer program to receive the parameters transmitted by the second gateway and to convert the parameters into noise. The conversion is performed e.g. by decoding the received parameters and generating the corresponding noise signals to be transmitted to a party connected to the first gateway.

The second gateway further includes specific computer program to receive the parameters transmitted by the first gateway and to convert the parameters into noise. The conversion is performed e.g. by decoding the received parameters and generating the corresponding noise signals to be transmitted to a party connected to the second gateway.

In order to communicate with a second party a first party establishes a VolP or VoATM connection to the second party. During those time intervals in which a party speaks the corresponding speech plus background noise is encoded into data packets, which are transmitted to the other party. To reduce data traffic during those time intervals in which a party does not speak voice activity detection (VAD) is implemented in each gateway.

During those time slots in which no voice of the first party is detected the process of detecting background noise at the first party in at least two different frequency ranges and encoding the noise in each frequency range into a noise parameter and of sending the encoded noise parameters to the second gateway via the VolP connection is started in the first gateway. The detection of the background noise is e.g. performed by measurement of the amplitude. The noise parameters are included in data packets which have a smaller size compared to data packets including encoded voice signals. Thus data traffic is reduced. The second gateway receives the noise parameters and performs decoding of the parameters into background noise, which is transmitted to the second party.

During those time slots in which no voice of the second party is detected the process of detecting background noise at the second party in at least two different frequency ranges and encoding the noise in each frequency range into a noise parameter and of sending the encoded noise parameters to the first gateway via the VolP connection is started in the second gateway. The detection of the background noise is e.g. performed by measurement of the amplitude. The noise parameters are included in data packets which have a smaller size compared to data packets including encoded voice signals. Thus data traffic is reduced. The first gateway receives the noise parameters and performs decoding of the parameters into background noise, which is transmitted to the first party.

## Claims

1. Gateway being configured such as to detect background noise of a first party being connected to a second party via a VolP connection in at least two different frequency ranges, to encode the noise in each frequency range into a noise parameter and to send the encoded noise parameters to a second gateway via the VolP connection.

2. Gateway being configured such as to detect background noise of a first party being connected to a second party via a VoATM connection in at least two different frequency ranges, to encode the noise in each frequency range into a noise parameter and to send the encoded noise parameters to a second gateway via the VoATM connection.

3. Gateway according to claim 1, wherein the gateway is being configured such as to perform voice activity detection.

4. Gateway according to claim 1, wherein the gateway is being configured such as to decode received noise parameters and to generate corresponding data packets.

5. Computer program having computer program codes to detect background noise of a first party being connected to a second party via a VolP or VoATM connection in at least two different frequency ranges, to encode the noise in each frequency range into a noise parameter and to send the encoded noise parameters to a second gateway via the VolP or VoATM connection, respectively.
